# DEMANDE DE BREVET EUROPEEN

(11) **EP 2 939 896 A1**
(43) Date de publication de la demande: **04.11.2015**
(21) Numéro de dépôt: 15161670.3
(22) Date de dépôt: 30.03.2015
(51) Int. Cl.: B61C 3/02, B60L 5/28

(54) **DISPOSITIF D'ALIMENTATION D'UN ÉQUIPEMENT ÉLECTRIQUE D'UN VÉHICULE FERROVIAIRE, UTILISATION DE DISPOSITIF ET SYSTÈME COMPRENANT UN TEL DISPOSITIF**

(30) Priorité: 30.04.2014 FR 1453952
(71) Demandeur: SNCF MOBILITES, 93200 Saint-Denis (FR)
(72) Inventeur: Coinon, Cédric, 62270 CANETTEMONT (FR); Pingue, Matthias, 27110 QUITTEBEUF (FR)
(74) Mandataire: Pontet Allano & Associes

(57) **Abrégé**

Dispositif apte à alimenter électriquement et à piloter au moins un circuit d'alimentation d'un équipement électrique d'un véhicule ferroviaire, le dispositif comprenant un accumulateur électrique apte à être relié électriquement à l'au moins un circuit d'alimentation via un connecteur et à mettre le circuit d'alimentation à la terre via un deuxième connecteur, le dispositif étant caractérisé en ce que l'accumulateur électrique est externe au véhicule ferroviaire.

## Description

### Domaine technique

La présente invention concerne un dispositif, un procédé et une utilisation d'un dispositif d'alimentation d'équipements électriques d'un véhicule ferroviaire. Elle concerne également un système comprenant un véhicule ferroviaire et au moins un dispositif selon l'invention.

### Etat de la technique antérieur

De nos jours, il n'est pas toujours possible de pouvoir alimenter électriquement, indépendamment et de façon ponctuelle les différents organes d'un véhicule ferroviaire qui doivent subir une vérification pour leur maintenance.

Un pantographe est en position descendue sur le toit de caisse du véhicule ferroviaire au moment d'être testé pour des raisons de sécurité évidentes. L'un des tests consiste à tarer le pantographe, c'est-à-dire à ajouter un poids au pantographe pour confirmer qu'il adhère bien à la caténaire. Pour réaliser cette opération, il est nécessaire de déployer le pantographe et donc de faire appel à au moins un opérateur et installer une nacelle qui lui permet d'accéder au toit de caisse du véhicule, ce qui est onéreux en temps et main d'oeuvre.

Les règles de maintenance des disjoncteurs continus situés sur le toit de caisse du véhicule ferroviaire imposent de mesurer une cote d'usure. En effet, l'ouverture et la fermeture répétées de ces disjoncteurs continus sont susceptibles de déclencher un arc électrique qui détruit le cuivre du contact de puissance. Cette cote d'usure ne peut pas être mesurée sans mettre sous tension l'électroaimant du disjoncteur. En effet, l'électroaimant du disjoncteur doit déplacer la partie mobile du contact afin de fermer celui-ci de manière à pouvoir mesurer la cote d'usure. La solution est alors de démonter la pièce pour la tester, ce qui est également onéreux en temps et main d'oeuvre.

La maintenance du sectionneur consiste à graisser deux couteaux. Le test consiste à écouter des bruits : un certain type de bruit correspond à un bon fonctionnement et un autre type de bruit correspond à un mauvais fonctionnement du sectionneur. Il n'existe que deux positions sur le sectionneur, soit fermée qui permet le passage du courant, soit ouverte lorsque la rame est reliée à la terre. Lorsque la rame est mise à la terre, il est donc impossible de graisser ces deux couteaux car ils sont inaccessibles à l'opérateur. En effet, il n'existe pas de position intermédiaire. Lors d'une opération de maintenance, le train devant impérativement être mis à la terre, il est impossible de graisser tous les couteaux.

Il faut manoeuvrer le disjoncteur continu pour pouvoir le graisser et pour écouter le bruit. Ce graissage est impossible si le disjoncteur continu n'est pas manoeuvré électriquement pour les mêmes raisons que celles énoncées pour le sectionneur.

La maintenance des freins sous caisse consiste à mesurer les faces internes des essieux, le diamètre de la roue, le relevé de l'épaisseur de boudin de roue, etc. Dans cette optique, la rame est desserrée mais les étriers collent la roue, et il faut donc faire tourner la roue pour procéder aux mesures. La maintenance doit donc être assurée roue par roue, ce qui nécessite d'utiliser des outillages adaptés, ce qui est long et fastidieux et induit des risques de se blesser.

Un but de l'invention est donc de proposer un dispositif d'alimentation d'un véhicule ferroviaire de façon à ce que l'opérateur puisse avoir accès plus facilement à ces organes ou puisse juste avoir accès à certains organes qui ne sont actuellement accessibles par aucun moyen, tout en améliorant la sécurité des opérateurs de maintenance et des usagers du véhicule ferroviaire.

### Exposé de l'invention

On atteint un tel objectif avec un dispositif apte à alimenter électriquement et à piloter au moins un circuit d'alimentation d'un équipement électrique d'un véhicule ferroviaire, le dispositif comprenant un accumulateur électrique apte à être relié électriquement à l'au moins un circuit d'alimentation via un connecteur et à mettre ledit circuit d'alimentation à la terre via un deuxième connecteur. Selon l'invention, le dispositif est caractérisé en ce que ledit accumulateur électrique est externe audit véhicule ferroviaire. L'accumulateur électrique est de préférence indépendant du véhicule ferroviaire.

Ainsi, le dispositif selon l'invention permet un accès externe et donc plus facile à tous les équipements électriques d'un véhicule ferroviaire, tout en améliorant la sécurité des opérateurs de maintenance et des usagers du véhicule ferroviaire.

De préférence, le dispositif selon l'invention peut comprendre en outre des moyens de commande agencés pour piloter l'au moins un circuit d'alimentation au moyen d'un signal de commande.

De préférence, le signal de commande est adapté pour simuler des ordres habituels à destination de l'équipement électrique.

Avantageusement, l'équipement électrique peut être un équipement électrique passif.

Les moyens de commande peuvent être configurés pour simuler une alimentation électrique d'au moins un circuit électrique de l'équipement électrique par un moyen d'alimentation usuel du véhicule ferroviaire. Ainsi, le dispositif de commande joue le rôle de cerveau d'un train et est apte à simuler des ordres habituels provenant du poste de contrôle du véhicule ferroviaire à destination de l'équipement électrique.

En particulier, les moyens de commande peuvent comprendre des moyens de commande de pantographe agencés pour piloter un pantographe. En ce cas, les moyens de commande de pantographe peuvent comprendre deux boutons poussoirs respectivement configurés pour générer un signal de commande apte à générer une montée et une descente de pantographe.

Alternativement ou en combinaison avec ce qui vient d'être dit sur les moyens de commande, les moyens de commande peuvent comprendre des moyens de commande de sectionneur agencés pour piloter un sectionneur. En ce cas, les moyens de commande de sectionneur peuvent comprendre un bouton poussoir pour générer un signal de commande apte à générer un déplacement de sectionneur entre une position ouverte et une position fermée de sectionneur et deux voyants.

Alternativement ou en combinaison avec ce qui vient d'être dit sur les moyens de commande, les moyens de commande peuvent comprendre des moyens de commande de disjoncteur monophasé agencés pour piloter un disjoncteur monophasé. En ce cas, les moyens de commande de disjoncteur monophasé peuvent comprendre un bouton poussoir pour générer un signal de commande apte à générer un déplacement de disjoncteur monophasé entre une position ouverte et une position fermée de sectionneur et deux voyants.

Alternativement ou en combinaison avec ce qui vient d'être dit sur les moyens de commande, les moyens de commande peuvent comprendre des moyens de commande de disjoncteur continu agencés pour piloter un disjoncteur continu. En ce cas, les moyens de commande de disjoncteur continu peuvent comprendre un bouton poussoir pour générer un signal de commande apte à générer un déplacement d'un électroaimant de disjoncteur continu.

De préférence, le dispositif selon l'invention peut comprendre un premier bornier agencé pour distribuer un premier flux électrique provenant de l'accumulateur électrique à au moins un moyen de commande.

Le dispositif selon l'invention peut en outre comprendre un premier dispositif de sécurité relié au premier bornier, le dispositif de sécurité étant configuré pour générer un avertissement en cas de coupure du premier flux électrique. En ce cas, le premier dispositif de sécurité peut comprendre des moyens visuels et/ou sonores pour générer respectivement un avertissement visuel et/ou sonore. Alternativement ou en combinaison avec les moyens visuels et/ou sonore, le premier dispositif de sécurité peut comprendre un relais avec un contact auxiliaire et un indicateur de détection du premier flux électrique.

De préférence, le dispositif selon l'invention peut comprendre un deuxième bornier agencé pour distribuer un deuxième flux électrique à au moins un chargeur d'accumulateur, le chargeur d'accumulateur étant agencé pour charger l'accumulateur.

Le dispositif selon l'invention peut en outre comprendre un deuxième dispositif de sécurité relié au deuxième bornier, le deuxième dispositif de sécurité étant configuré pour générer un avertissement en cas de coupure du deuxième flux électrique. En ce cas, le deuxième dispositif de sécurité peut comprendre des moyens visuels et/ou sonores pour générer respectivement un avertissement visuel et/ou sonore. Alternativement ou en combinaison avec les moyens visuels et/ou sonore, le deuxième dispositif de sécurité peut comprendre un relais avec un contact auxiliaire et un indicateur de détection du premier flux électrique.

De préférence, le dispositif selon l'invention comprend une première console comprenant l'accumulateur électrique, la première console étant disposée à distance d'une deuxième console comprenant les moyens de commande et le connecteur, l'accumulateur électrique et les moyens de commande étant reliés par une liaison électrique.

Alternativement ou en combinaison avec ce qui vient d'être dit sur les moyens de commande, la deuxième console peut comprendre des moyens de commande de freins agencés pour piloter un frein. En ce cas, les moyens de commande de freins peuvent comprendre un commutateur pour générer un signal de commande apte à générer un déplacement de frein entre une position serrée et une position desserrée de frein. Alimenter électriquement le frein permet de desserrer toutes les roues en une seule fois, ce qui n'est pas possible autrement. Il n'y a plus besoin d'outillage, il y a un gain de temps et il n'y a plus de risques pour l'opérateur de se blesser.

Selon un autre aspect de l'invention, il est proposé un procédé d'alimentation électrique et de pilotage d'au moins un circuit d'alimentation d'un équipement électrique d'un véhicule ferroviaire, le procédé mettant en oeuvre un dispositif selon l'invention.

Dans un mode de réalisation, le dispositif est relié à une pluralité de circuits d'alimentations d'équipements électriques de véhicule ferroviaire.

Selon un autre aspect de l'invention, il est proposé une utilisation d'un procédé l'invention contrôler et/ou réparer l'au moins un équipement électrique d'un véhicule ferroviaire.

Selon un autre aspect de l'invention, il est proposé un système comprenant au moins un équipement électrique de véhicule ferroviaire comprenant un circuit d'alimentation et au moins un dispositif selon l'invention.

### Description des figures et modes de réalisation

D'autres avantages et particularités de l'invention apparaîtront à la lecture de la description détaillée de mise en oeuvre et de modes de réalisation nullement limitatifs, et des dessins annexés suivants :
- la figure 1 est une vue schématique d'une première partie d'un dispositif selon l'invention ;
- la figure 2 est une vue schématique du dispositif selon l'invention ;
- la figure 3 est une vue schématique d'un système selon l'invention.

Ce mode de réalisation n'étant nullement limitatif, on pourra notamment considérer des variantes de l'invention ne comprenant qu'une sélection de caractéristiques décrites par la suite isolées des autres caractéristiques décrites (même si cette sélection est isolée au sein d'une phrase comprenant ces autres caractéristiques), si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, ou avec seulement une partie des détails structurels si cette partie uniquement est suffisante pour conférer un avantage technique ou pour différencier l'invention par rapport à l'état de la technique antérieure.

Sur les figures un élément apparaissant sur plusieurs figures conserve la même référence.

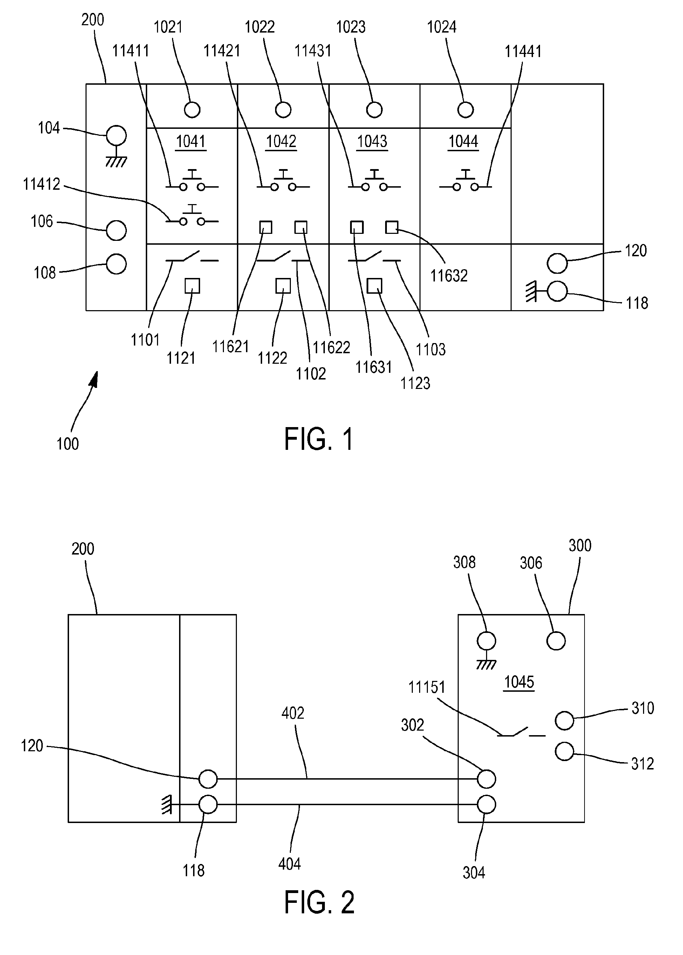

Il est décrit en référence aux figures 1 et 2 un dispositif 100 selon l'invention.

Le dispositif 100 est apte à alimenter électriquement et à piloter au moins un circuit d'alimentation d'un équipement électrique d'un véhicule ferroviaire.

Le dispositif 100 comprend un accumulateur électrique (non représenté) relié électriquement à des connecteurs 1021, 1022, 1023, 1024.

Le dispositif 100 est par ailleurs apte à mettre à la terre via un connecteur 104 le circuit électrique de l'équipement électrique du véhicule.

Le dispositif 100 comprend un premier bornier (non représenté). Ce premier bornier est agencé pour distribuer un premier flux électrique provenant de l'accumulateur électrique à différents moyens de commandes 1041, 1042, 1043, 1044.

Le dispositif 100 comprend un premier dispositif de sécurité (non représenté) relié au premier bornier. Le dispositif de sécurité est configuré pour générer un avertissement en cas de coupure du premier flux électrique. Ce premier dispositif de sécurité comprend un avertisseur visuel et sonore 106. Le premier dispositif de sécurité comprend un relais avec un contact auxiliaire (non représenté) et un indicateur de détection du premier flux électrique via l'avertisseur lumineux et sonore 106.

Le dispositif 100 comprend en outre un deuxième bornier agencé pour distribuer un deuxième flux électrique au moins à un chargeur d'accumulateur (non représenté). Le chargeur d'accumulateur est agencé pour charger l'accumulateur. Le dispositif 100 comprend également un deuxième dispositif de sécurité (non représenté) qui est relié au deuxième bornier. Le deuxième dispositif de sécurité est configuré pour générer un avertissement en cas de coupure du deuxième flux électrique. Ce deuxième dispositif de sécurité comprend un avertisseur visuel et sonore 108.

Le dispositif 100 comprend en outre les moyens de commande 1041, 1042, 1043, 1044 agencés pour piloter des circuits d'alimentation de différents organes d'un train au moyen d'un signal de commande. De plus, les moyens de commande 1041, 1042, 1043, 1044 sont configurés pour simuler une alimentation électrique d'au moins un circuit électrique de l'équipement électrique par un moyen d'alimentation usuel du véhicule ferroviaire.

En particulier, le dispositif 100 comprend :
- un moyen de commande de pantographe 1041 agencé pour piloter un pantographe, ce moyen de commande comprenant :
   o un interrupteur 1101 ayant pour fonction d'alimenter ou non le circuit de commande 1041 ;
   o un voyant lumineux 1121 ayant pour fonction d'indiquer l'état d'alimentation du circuit de commande 1041 ;
   o deux boutons poussoirs 11411, 11412 respectivement configurés pour générer un signal de commande apte à générer une montée et une descente de pantographe.
- un moyen de commande de sectionneur 1042 agencé pour piloter un sectionneur, ce moyen comprenant :
   o un interrupteur 1102 ayant pour fonction d'alimenter ou non le circuit de commande 1042 ;
   o un voyant lumineux 1122 ayant pour fonction d'indiquer l'état d'alimentation du circuit de commande 1042 ;
   o un bouton poussoir 11421 pour générer un signal de commande apte à générer un déplacement de sectionneur entre une position ouverte et une position fermée de sectionneur ;
   o deux voyants 11621, 11622 pour la position «ouvert/fermé».
- un moyen de commande de disjoncteur monophasé 1043 agencé pour piloter un disjoncteur monophasé, ce moyen comprenant :
   o un interrupteur 1103 ayant pour fonction d'alimenter ou non le circuit de commande 1043 ;
   o un voyant lumineux 1123 ayant pour fonction d'indiquer l'état d'alimentation du circuit de commande 1043 ;
   o un bouton poussoir 11431 pour générer un signal de commande apte à générer un déplacement de disjoncteur monophasé entre une position ouverte et une position fermée de sectionneur ;
   o deux voyants 11631, 11632 pour la position «ouvert/fermé».
- un moyen de commande de disjoncteur continu 1044 agencé pour piloter un disjoncteur continu, ce moyen comprenant :
   ∘ un bouton poussoir 11441 pour générer un signal de commande apte à générer un déplacement d'un électroaimant de disjoncteur continu.
- deux connecteurs 118, 120 apte à être connectés à une autre partie de dispositif, le connecteur 118 étant relié à la terre et le connecteur 120 étant relié au chargeur d'accumulateur.

Le dispositif 100 comprend une première console 200 qui comprend les différentes parties décrites ci dessus.

La console 200 est disposée à distance d'une deuxième console 300.

La console 200 est reliée à la console 300 par deux liaisons électriques 402, 404.

La liaison électrique 402 relie le connecteur 120 à un connecteur 302 ainsi apte à être relié au chargeur d'accumulateur, tandis que la liaison électrique 404 relie le connecteur 118 à un connecteur 304 ainsi apte à être relié à la terre.

La console 300 comprend :
- un connecteur 306 apte à alimenter électriquement et à piloter au moins un circuit d'alimentation d'une commande de frein d'un véhicule ferroviaire et apte à être relié électriquement à l'accumulateur électrique ;
- un connecteur 308 apte à mettre à la terre le circuit électrique de l'équipement de commande de frein ;
- un troisième dispositif de sécurité (non représenté) relié au premier aux connecteurs 302 et 304. Le troisième dispositif de sécurité est configuré pour générer un avertissement en cas de coupure du flux électrique entre les connecteurs 302 et 304. Ce troisième dispositif de sécurité comprend un avertisseur visuel et sonore 310. Le troisième dispositif de sécurité comprend un relais avec un contact auxiliaire (non représenté) et un indicateur de détection du flux électrique entre les connecteurs 302 et 304 via l'avertisseur lumineux et sonore 310 ;
- un bouton test du dispositif de sécurité 312 pour tester le fonctionnement du troisième dispositif de sécurité.

En particulier, la console 300 comprend :
- des moyens de commande de freins 1045 agencés pour piloter un frein, les moyens de commande de freins 1045 comprenant :
   ∘ un commutateur 1151 pour générer un signal de commande apte à générer un déplacement de frein entre une position serrée et une position desserrée de frein.

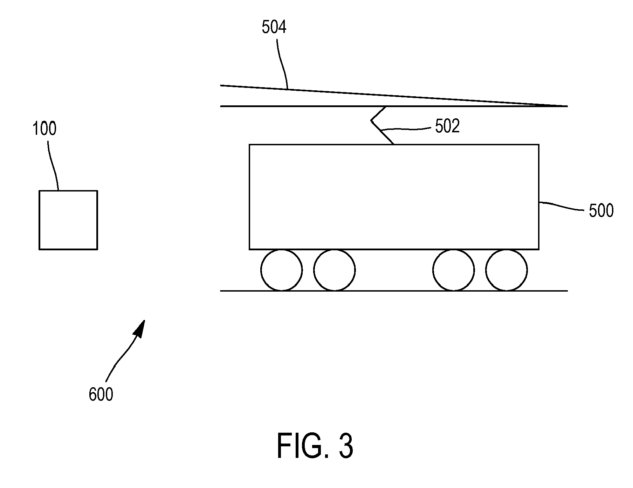

La figure 3 illustre un système 600 selon l'invention.

Le système 600 comprend un pantographe 502 d'un véhicule ferroviaire 500. Le pantographe 502 est appelé à être relié à une caténaire 504.

Sur la figure 3, une batterie du véhicule ferroviaire est déconnectée et le véhicule ferroviaire est mis à la masse.

Le système 600 comprend aussi un dispositif 100 selon l'invention ainsi qu'il vient d'être décrit. Le système 100 est relié à une tension secteur permettant d'alimenter le chargeur batterie ainsi que le relais de détection présence de 230 V permettant ainsi le déclenchement du deuxième dispositif de sécurité en cas de coupure de courant.

Le chargeur batterie permet d'alimenter la batterie, le relais de détection présence 24V en cas de dysfonctionnement du chargeur ainsi que les différents circuits d'alimentation des différents organes.

Bien que la batterie du véhicule ferroviaire soit déconnectée, il est possible avec le dispositif selon l'invention de déployer le pantographe en utilisant l'accumulateur du dispositif selon l'invention.

Ainsi, une utilisation typique d'un dispositif selon l'invention consiste en le contrôle ou la réparation d'au moins un équipement électrique d'un véhicule ferroviaire.

Une autre utilisation typiquement d'un dispositif selon l'invention est la mise en bac de test simultanée de plusieurs équipements électriques d'un véhicule ferroviaire.

Bien sûr, l'invention n'est pas limitée aux exemples qui viennent d'être décrits et de nombreux aménagements peuvent être apportés à ces exemples sans sortir du cadre de l'invention.

## Revendications

1. Dispositif (100) apte à alimenter électriquement et à piloter au moins un circuit d'alimentation d'un équipement électrique (502) d'un véhicule ferroviaire (500), ledit dispositif comprenant un accumulateur électrique apte à être relié électriquement audit au moins un circuit d'alimentation via un connecteur (1021, 1022, 1023, 1024) et à mettre ledit circuit d'alimentation à la terre via un deuxième connecteur (104), ledit accumulateur électrique étant externe audit véhicule ferroviaire, ledit dispositif comprenant en outre des moyens de commande (1041, 1042, 1043, 1044) agencés pour piloter l'au moins un circuit d'alimentation au moyen d'un signal de commande, adapté pour simuler des ordres habituels à destination de l'équipement électrique.

2. Dispositif selon la revendication 1, **caractérisé en ce que** les moyens de commande (1041, 1042, 1043, 1044) sont configurés pour simuler une alimentation électrique de l'au moins un circuit électrique de l'équipement électrique par un moyen d'alimentation usuel du véhicule ferroviaire.

3. Dispositif selon la revendication 1 ou 2, **caractérisé en ce que** les moyens de commande (1041) comprennent des moyens de commande de pantographe agencés pour piloter un pantographe.

4. Dispositif selon l'une des revendications 1 à 3, **caractérisé en ce que** les moyens de commande (1042) comprennent des moyens de commande de sectionneur agencés pour piloter un sectionneur.

5. Dispositif selon l'une des revendications 1 à 4, **caractérisé en ce que** les moyens de commande (1043) comprennent des moyens de commande de disjoncteur monophasé agencés pour piloter un disjoncteur monophasé.

6. Dispositif selon l'une des revendications 1 à 5, **caractérisé en ce que** les moyens de commande (1044) comprennent des moyens de commande de disjoncteur continu agencés pour piloter un disjoncteur continu.

7. Dispositif selon l'une des revendications 1 à 6, **caractérisé en ce qu'**il comprend un premier dispositif de sécurité, ledit premier dispositif de sécurité étant configuré pour générer un avertissement (106) en cas de coupure d'un premier flux électrique provenant de l'accumulateur électrique à au moins un moyen de commande.

8. Dispositif selon l'une des revendications 1 à 7, **caractérisé en ce qu'**il comprend un deuxième dispositif de sécurité, ledit deuxième dispositif de sécurité étant configuré pour générer un avertissement (108) en cas de coupure d'un deuxième flux électrique provenant d'un chargeur d'accumulateur.

9. Dispositif selon l'une quelconque des revendications 1 à 8, **caractérisé en ce qu'**il comprend une première console (200) comprenant l'accumulateur électrique, la première console étant disposée à distance d'une deuxième console (300) comprenant le connecteur (306), l'accumulateur électrique et les moyens de commande étant reliés par une liaison électrique.

10. Dispositif selon la revendication 9, **caractérisé en ce que** la deuxième console comprend des moyens de commande de freins (1045) agencés pour piloter un frein.

11. Procédé d'alimentation électrique et de pilotage d'au moins un circuit d'alimentation d'au moins un équipement électrique (502) d'un véhicule ferroviaire, ledit procédé mettant en oeuvre un dispositif selon l'une des revendications 1 à 10.

12. Procédé selon la revendication 11, **caractérisé en ce que** le dispositif est relié à une pluralité de circuits d'alimentations d'équipements électriques de véhicule ferroviaire (500).

13. Utilisation d'un procédé selon la revendication 11 ou 12 pour contrôler et/ou réparer l'au moins un équipement électrique (502) d'un véhicule ferroviaire (500).

14. Système comprenant :
- au moins un équipement électrique (502) de véhicule ferroviaire (500) comprenant un circuit d'alimentation,
- au moins un dispositif selon l'une des revendications 1 à 10.
